(19) Europäisches Patentamt
European Patent Office
Office européen des brevets

(11) **EP 3 223 572 B1**

(12) **EUROPEAN PATENT SPECIFICATION**

(45) Date of publication and mention of the grant of the patent:
**04.03.2020 Bulletin 2020/10**

(51) Int Cl.:
***H04W 74/08*** *(2009.01)*

(21) Application number: **16290054.2**

(22) Date of filing: **24.03.2016**

(54) **PRIMARY RADIO COMMUNICATIONS DEVICE AND METHOD TO OPERATE THE PRIMARY RADIO COMMUNICATIONS DEVICE**

ERSTE FUNKKOMMUNIKATIONSVORRICHTUNG UND VERFAHREN ZUM BETRIEB DER ERSTEN FUNKKOMMUNIKATIONSVORRICHTUNG

PREMIER DISPOSITIF DE COMMUNICATION RADIO ET PROCÉDÉ POUR LE FAIRE FONCTIONNER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.09.2017 Bulletin 2017/39**

(73) Proprietor: **Alcatel Lucent**
**91620 Nozay (FR)**

(72) Inventors:
 • **WILD, Thorsten**
  **70435 Stuttgart (DE)**
 • **SAUR, Stephan**
  **70435 Stuttgart (DE)**
 • **DOLL, Mark**
  **70435 Stuttgart (DE)**

(74) Representative: **DREISS Patentanwälte PartG mbB**
**Postfach 10 37 62**
**70032 Stuttgart (DE)**

(56) References cited:
**WO-A1-2011/065875    WO-A1-2012/082053**
**US-A1- 2010 278 114**

 • **LG ELECTRONICS: "RACH Design Issues of Large Cell Deployment", 3GPP DRAFT; R1-062557, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061004, 4 October 2006 (2006-10-04), XP050103074, [retrieved on 2006-10-04]**

## Description

### Field of the invention

The present invention relates to a primary radio communications device for a radio communications network and to a method to operate such primary radio communications device.

The invention further relates to a secondary radio communications device of a radio communications network and to a method to operate such secondary radio communications device.

### Background

The upcoming "Internet of Things" increases the so called machine-type communication with an associated traffic volume. Moreover, with increasing numbers of active mobile users in a cell, scalability of the radio access system of LTE is limited. One important characteristic is that a big number of machine devices transmit sporadically small payload messages, i.e. small individual user throughput, but overall significant network load. The radio access schemes of existing technologies like LTE are primarily designed for the support of high data rates and high mobility. In consequence the radio access of machine devices becomes rather inefficient regarding required signalling overhead.

In uplink random access channels of mobile radio systems like LTE, preambles are used, e.g. for activity detection and timing and frequency offset estimation. Preambles need certain properties, namely for good correlation capability (e.g. constant amplitude zero autocorrelation (CAZAC)) and robustness against Doppler and delay spread. Therefor the preamble set is limited.

With increasing number of devices, e.g. due to massive machine communication (MMC), the number of preamble collision events increases, thus the same preambles are transmitted by different users and superimpose at the receiver side. In this case it is typically not possible to even detect collision events or apply any multi-user detection, as due to superposition, multi-path propagation of one user cannot be properly distinguished from receiving preamble signals from two or more users.

WO 2012/082053 A1 discloses a method in a user equipment for requesting access to a radio communications network. In case of obtaining more than one random access preambles, each random access preamble is transmitted over a separate antenna port out of the at least two transmit antenna ports.

WO 2011/065875 A1 discloses a method in a mobile terminal, for transmission of a random access request using transmit diversity. The method comprises the steps of: -receiving, from a network node, a communication relating to network node assisted random access, said communication comprising information related to a non-transparent diversity scheme; - transmitting the network node assisted random access request to a network node, using more than one transmit antenna and applying the non-transparent diversity scheme

### Summary

According to a first aspect it is proposed a primary radio communications device, especially a terminal, for a radio communications network , the primary radio communications device being configured to: determine a primary preamble sequence with a first sequence property; determine a secondary preamble sequence with a second sequence property associated with the first sequence property; and to transmit a preamble comprising the primary preamble sequence and the secondary preamble sequence to a secondary radio communications device, especially a base station.

Advantageously a preamble space, especially for a random access, is enlarged. Consequently the collision probability is decreased as the corresponding preamble search space is enlarged. Even a collision of the primary preamble sequence can be detected as preamble diversity is provided by the secondary preamble sequence. A respective collision detection enables application of further access schemes like Distributed Queuing Random Access Protocol (DQRAP). Also multi user detection benefits and an efficient control signaling is possible. According to this aspect, Massive Machine Communication, MMC, and the Internet of Things, IoT, is feasible without even requiring extra radio resource.

The association between the sequence properties allows a use of an increased number of secondary preamble sequences which also increases detection probability at the secondary radio communications device.

Moreover, the secondary preamble sequence is shorter than the primary preamble sequence.

Advantageously resource consumption for the secondary preamble sequence is decreased.

The second sequence property of the secondary preamble sequence is relaxed with respect to the first sequence property of the primary preamble sequence regarding the capability to derive accurate frequency- and/or time-offsets of the preamble.According to an advantageous embodiment, the primary radio communications device is being further configured to: transmit the primary preamble sequence via a first primary radio resource, especially a first primary uplink radio resource; and transmit the secondary preamble sequence via a second primary radio resource, especially a second primary uplink radio resource.

Advantageously, this separation of primary radio resources increases the detection probability on the side of the secondary radio communications device.

According to an advantageous embodiment the second sequence property of the secondary preamble sequence is associated with respect to the first sequence property of the primary preamble sequence.

According to an advantageous embodiment a group of secondary preamble sequences is associated with one single primary preamble sequence. This association scheme enhances the preamble detection space.

According to an advantageous embodiment a denial comprising a reference to the secondary preamble sequence is received. Therefore, the primary radio communications device is able to remain silent and will not send the data.

According to an advantageous embodiment a grant comprising a reference to the secondary preamble sequence is received, and wherein data is transmitted in response to the grant.

Therefore, the primary radio communications device is being scheduled for data transmission.

According to an advantageous embodiment the primary preamble sequence is selected from a table with a limited number of predefined primary preamble sequences, and the secondary preamble sequence is selected from a table with a limited number of predefined secondary preamble sequences. This advantageously allows an efficient random access scheme.

According to an advantageous embodiment the primary preamble sequence is selected randomly from the table with the limited number of predefined primary preamble sequences, and the secondary preamble sequence is selected randomly from the table with the limited number of predefined secondary preamble sequences. The random selection is advantageously easy to implement and provides an efficient way to determine the preamble.

According to an advantageous embodiment the secondary preamble sequence is determined according to a priority class of the primary radio communications device or a service running on the primary radio communications device. This embodiment allows a combination of efficient preamble detection and a simultaneous prioritization.

According to an advantageous embodiment the secondary preamble sequence is transmitted via a subset of a certain number of LTE subcarriers of a LTE guard band between a LTE preamble sequence and adjacent data allocations.

According to an advantageous embodiment the preamble is a random access preamble.

According to a second aspect, it is proposed a secondary radio communications device being configured to: receive a preamble from at least one primary radio communications device, especially a terminal, via a primary radio resource, especially a primary uplink radio resource; verify that a primary preamble sequence is present in the preamble, wherein the primary preamble sequence has a first sequence property; and to verify that a secondary preamble sequence is present in the preamble, wherein the secondary preamble sequence has a second sequence property associated with the first sequence property.

Advantageously a preamble space, especially for a random access, is enlarged. Consequently the collision probability is decreased as the corresponding preamble search space is enlarged. Even a collision of the primary preamble sequence can be detected as preamble diversity is provided by the secondary preamble sequence. A respective collision detection enables application of further access schemes like Distributed Queuing Random Access Protocol (DQRAP). Also multi user detection benefits and an efficient control signaling is possible. According to this aspect, Massive Machine Communication, MMC, and the Internet of Things, IoT, is feasible without even requiring extra radio resource.

According to an advantageous embodiment the secondary radio communications device is being configured to: receive simultaneously a first preamble from a first primary radio communications device and a second preamble from a second primary radio communications device; and determine a collision of access attempts from the first and second primary communication devices, the determining comprising: verifying that a first primary preamble sequence (ps1) has been received, verifying that a first secondary preamble sequence being associated with the first primary preamble sequence has been received, and verifying that a second secondary preamble sequence being associated with the first primary preamble sequence has been received.

Advantageously the case of an access collision is detected.

According to an advantageous embodiment the secondary radio communications device is configured to: perform an estimation of a first channel, especially a first uplink channel, between the first primary radio communications device and the secondary radio communications device in dependence on the first secondary preamble sequence; perform an estimation of a second channel, especially a second uplink channel, between the second primary radio communications device and the secondary radio communications device in dependence on the second secondary preamble sequence; and determining a correlation value by comparing the estimations of the first and second channel.

This provides a collision resolution strategy.

According to an advantageous embodiment the secondary radio communications device is configured to: receive first data from the first primary radio communication device and second data from the second primary radio communication device, the first and second data being superimposed, via a same secondary radio resource, especially a same secondary uplink radio resource; decoding, if the first and second channel are assumed to be sufficiently uncorrelated based on the determined correlation value, the superimposed first and second data.

This provides a collision resolution strategy.

According to an advantageous embodiment the secondary radio communications device is being configured to: granting if the first and second channels are assumed to be not sufficiently uncorrelated based on the determined correlation value: a first secondary radio resource for data transmission by the first primary radio communications device, and a second secondary radio resource for data transmission by the second primary radio communications device.

This provides a collision resolution strategy.

The invention is set-out in the appended claims.

**Brief description of the figures**

Figure 1, 4, 5, 6, 7, 8 and 12 show a schematic flow diagram, respectively;
Figure 2 shows schematically a cell of an exemplary radio communications network;
Figure 3 shows a schematic association scheme;
Figure 9 illustrates schematically steps of figure 1 and a step of figure 8;
Figure 10 shows schematically a block diagram;
Figure 13 shows an exemplary radio frame;
Figure 14 shows a primary radio communications device; and
Figure 15 shows a secondary radio communications device.

**Description of the embodiments**

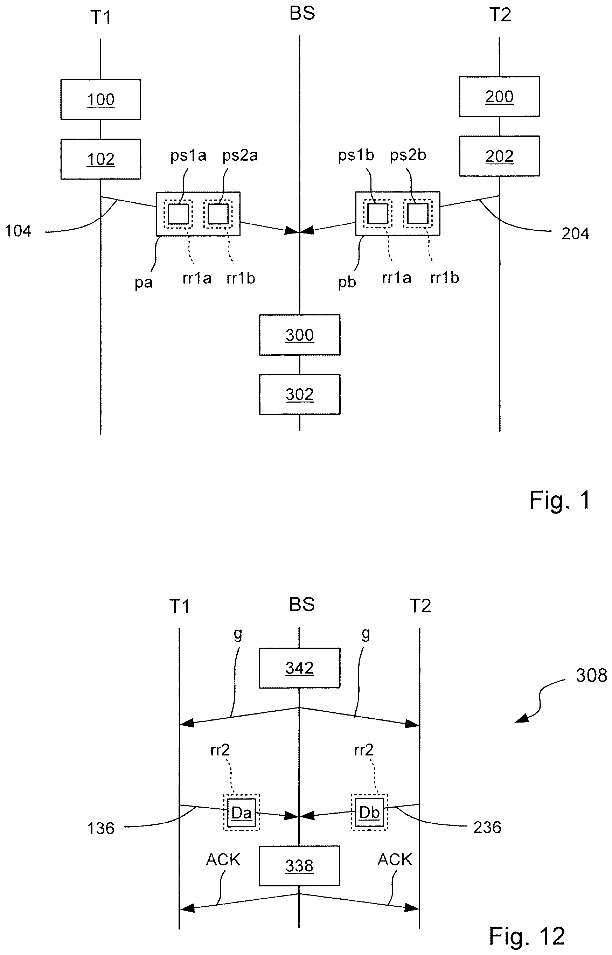

Figure 1 shows a schematic flow diagram. A first primary radio communications device T1, especially a first terminal, for a radio communications network determines in a step 100 a first primary preamble sequence ps1a with a first sequence property. In the step 102 the first primary radio communications device T1 determines a first secondary preamble sequence ps2a with a second sequence property being different from the first sequence property.

A first preamble pa comprises the first primary preamble sequence ps1a and the first secondary preamble sequence ps2a. The first primary preamble sequence ps1a is transmitted in step 104 to a secondary radio communications device BS, especially a base station, via a first primary radio resource rr1a, especially a first primary uplink radio resource. The first secondary preamble sequence ps2a is transmitted in step 104 to the secondary radio communications device BS, especially the base station, via second primary radio resource rr1b, especially a second primary uplink radio resource.

A second primary radio communications device T2, especially a second terminal, for the radio communications network determines in a step 200 a second primary preamble sequence ps1b with a first sequence property. In a step 202 the second primary radio communications device T2 determines the second secondary preamble sequence ps2b with a second sequence property being different from the first sequence property.

The determination of the respective primary and secondary preambles sequences ps1a to ps2b in steps 100, 102, 200, 202 is made randomly, which does not necessarily imply a random preamble sequence itself but a randomly selected random preamble sequence.

According to an embodiment the determination of the respective primary and secondary preamble sequences ps1a to ps2b in steps 100, 102, 200, 202 is made in dependence on at least one of the following criteria: the selection of one-stage or two-stage transmission, tagging to a secondary radio resource rr2 with particular capabilities (size, expected transport format, etc.).

A second preamble pb comprises the second primary preamble sequence ps1b and the second secondary preamble sequence ps2b. The second preamble pb is transmitted in step 204 to the secondary radio communications device BS. The second primary preamble sequence ps1b is transmitted in step 204 to the secondary radio communications device BS via the first primary radio resource rr1a resulting in a collision if the first primary preamble sequence ps1a and the second primary preamble sequence ps1b are equal. The second secondary preamble sequence ps2b is transmitted in step 204 to the secondary radio communications device BS via second primary radio resource rr1b.

According to an embodiment the first sequence property comprises that a cyclic autocorrelation value of the first preamble sequence ps1 is smaller than an autocorrelation threshold value. Preferably, the first sequence property is a CAZAC property (CAZAC: constant amplitude zero autocorrelation). The second sequence property comprises that a cyclic autocorrelation value of the second preamble sequence ps2 is equal to or greater than the autocorrelation threshold value. Therefore, the second sequence property is not a CAZAC property.

According to an embodiment the primary preamble sequence ps1 is a Zadoff-Chu-Sequence and the secondary preamble sequence ps2 is one of the following sequences: random QPSK sequences, gold sequences.

According to an embodiment the primary preamble sequence ps1 is a m-Sequence and the secondary preamble sequence ps2 is one of the following sequences: random QPSK sequences, gold sequences.

Consequently, the second sequence property of the secondary preamble sequence ps2 is associated with and linked with the first sequence property of the primary preamble sequence ps1. This association or link between both sequence properties comprises a mathematically relaxed second property with respect to the first property. This allows a greater number of secondary preamble sequences ps2 than primary preamble sequences ps1. Furthermore, the secondary preamble sequence ps2 is shorter than the primary preamble sequence ps1.

According to an embodiment the second sequence property of the secondary preamble sequence ps2 is relaxed with respect to the first sequence property of the primary preamble sequence ps1 regarding the capability to derive accurate frequency- and/or time-offsets of the respective preambles pa and pb.

According to an embodiment, if a priority class of the primary radio communications device T1 or of a service running on the primary radio communications device T1 is available, the first secondary preamble sequence ps2a is determined in dependence on the priority class. This allows the secondary radio communications device BS to prioritize the primary radio communications device T1 with a higher priority class over another primary radio communications device T2 with a lower priority class.

The allocation of the first primary radio resource rrla is fixed, but the allocation of the second primary radio resource rrlb may differ. As the preambles pa, pb are received at the secondary radio communications device BS simultaneously, it is shown the case of a collision of the preambles pa, pb, the collision comprising the first and second primary preamble sequences ps1a, ps1b being equal.

The secondary radio communication device BS receives according to the steps 104 and 204 preambles pa, pb from the primary radio communication devices T1, T2 via the primary radio resource rrla. In a step 300 it is verified that at least one primary preamble sequence ps1a, ps1b is present in the preamble pa, pb. The step 300 can comprise a correlation receiver to detect the primary preamble sequences ps1a, ps1b. Furthermore, it is verified in the step 302, that at least one secondary preamble sequence ps2a, ps2b is present in the preamble pa, pb. The step 302 can comprise a correlation receiver to detect the secondary preamble sequences ps2a, ps2b.

In or after the step 300 a timing offset correction and/or a channel extrapolation is determined on the basis of detected primary preamble sequences ps1 and can be used to better detect the secondary preamble sequences ps2.

If the secondary radio communications device BS detects only one single primary preamble sequence ps1 and one single secondary preamble sequence ps2, the secondary radio communications device BS is not able to detect a collision when the respective primary and secondary preamble sequences were sent from 2 different primary radio communications devices T1 and T2. However, the augmented preamble search space reduces the probability that such a situation occurs.

Throughout the description the primary radio communications device T1, T2 may refer to a terminal, user equipment, etc. and the secondary radio communications device BS may refer to a base station, therefore referring to an uplink transmission case of payload. However, the described communication schemes may be also applied to a peer-to-peer case, where the primary and secondary radio communications devices T1, T2, BS are of the same hierarchy level, and may also be applied to a downlink case, where the secondary radio access device BS randomly accesses the primary radio communications devices T1, T2.

The wording primary/secondary regarding the radio resource, the radio communication devices and the like is intended only for discriminating the respective entities and does not necessarily imply a prioritization or a further technical difference between the mentioned entities.

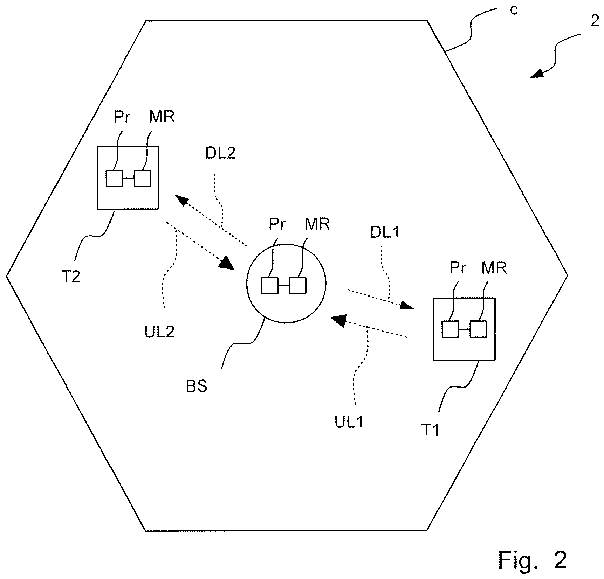

Figure 2 shows schematically a cell C of an exemplary radio communications network 2, especially a cellular radio communications network. The primary radio communications devices T1, T2 may connect to the secondary radio communications device BS. It is provided a respective downlink channel DL1, DL2 and a respective uplink channel UL1, UL2. Of course the secondary radio communications device BS may comprise respective remote radio heads, each remote radio head providing a respective cell C. Of course figure 2 is for illustrative purpose only and one secondary radio communications device BS may be capable of providing a plurality of cells C by means of respective remote radio heads. The functionality of the secondary radio access device BS can be split up into a plurality of devices. The term secondary radio communications device BS includes especially an eNodeB.

The secondary radio communications device BS, the primary radio communications devices T1, T2 each comprise one or more processors Pr, one or more computer readable mediums M, one or more transceivers and one or more antennas. On the computer readable medium MR a computer program product is stored, wherein the computer program product comprises instructions, that, when executed by the processor Pr, perform the operations according to the methods described herein.

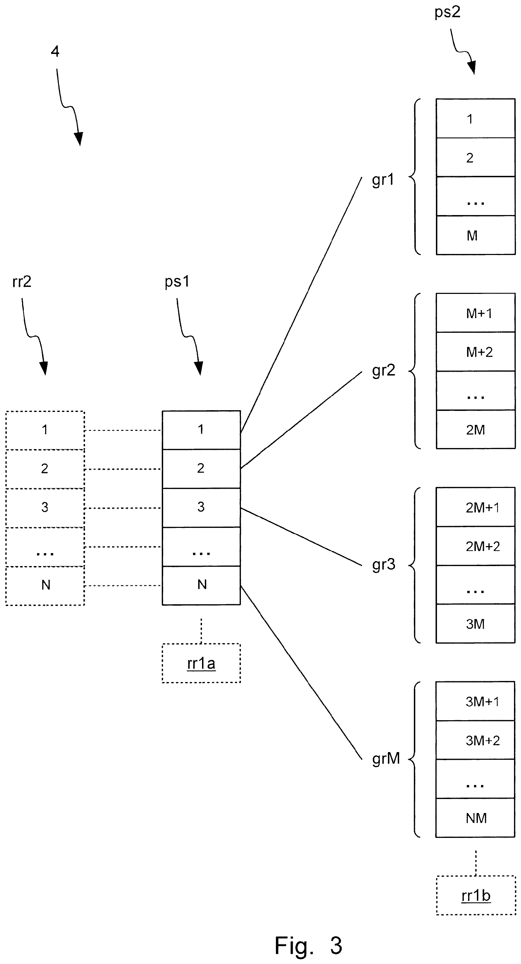

Figure 3 shows a schematic association scheme 4. A plurality of 1 to N primary preamble sequences ps1 is provided. Each one of the 1 to N primary preamble sequences ps1 is associated with a group gr1 to grN of 1 to M, M+1 to 2M, etc. secondary preamble sequences ps2. So, the group gr1 of secondary preamble sequences ps2 with index 1 to M is associated with one single primary preamble sequence ps1 with index 1. Consequently, the total number of NM secondary preamble sequences ps2 is available. The secondary preamble sequences ps2 are partitioned into the groups gr1 to grM so that each group comprises respective secondary preamble sequences ps2 with a larger Hamming distance for pseudo-random QPSK than a random distribution of the same secondary preamble sequences ps2 into the groups.

Furthermore, each one of the 1 to N primary preamble sequences ps1 is associated with a respective one of a plurality of 1 to N secondary radio resources rr2 for the transmission of data. Is it assumed here that the assignment of the primary preamble sequence ps1 to the secondary radio resources rr2 is already done per scheduling grant or a fixed tagging. In general, independent from a specific scheduling decision in a subframe, it is operated with an over-provisioning of the primary preamble sequence ps1 over the secondary radio resources rr2, i.e. the number of available primary preamble sequences ps1 may be significantly larger than the number of available secondary radio resources rr2.

The secondary radio resource rr2 are intended for data transmission after the transmission of the preamble p. A preamble p comprises a single one of the plurality of primary preamble sequences ps1 and a single one of the plurality of secondary preamble sequences ps2.

The second primary radio resources rrlb for the transmission of the secondary preamble sequences ps2 are preferably placed at the position of unused radio resource to avoid further overhead.

Furthermore, first primary radio resource rrla are allocated for the transmission of the primary preamble sequence ps1. Second primary radio resource rrlb are allocated for the transmission of the secondary preamble sequence ps2.

It is assumed in this disclosure, that a primary radio communications device T1, T2 selects one single primary preamble sequence ps1 and one single secondary preamble sequence ps2 to build up a preamble p. Furthermore it is assumed in this disclosure, that the selected primary preamble sequence ps1 and the selected secondary preamble sequence ps2 are transmitted via disjoint radio resources, the first primary radio resource rrla and the second primary radio resource rrlb.

Due to the associated second sequence property the space of suitable secondary preamble sequences ps2 is greater than the space of suitable primary preamble sequences ps1. Therefore, each one of the secondary preamble sequences ps2 is determined to be unique in the set of 1 to NM secondary preamble sequences ps2. The primary and secondary preamble sequences ps1 and ps2 are known to the primary radio communications devices T1, T2 for a selection and to the secondary radio communications device BS for a detection and respective control signalling.

Therefore, the primary preamble sequence ps1 is selected from a table with a limited number of predefined primary preamble sequences with indices 1 ... N, and the secondary preamble sequence ps2 is selected from a table with a limited number of predefined secondary preamble sequences with indices 1 ... NM.

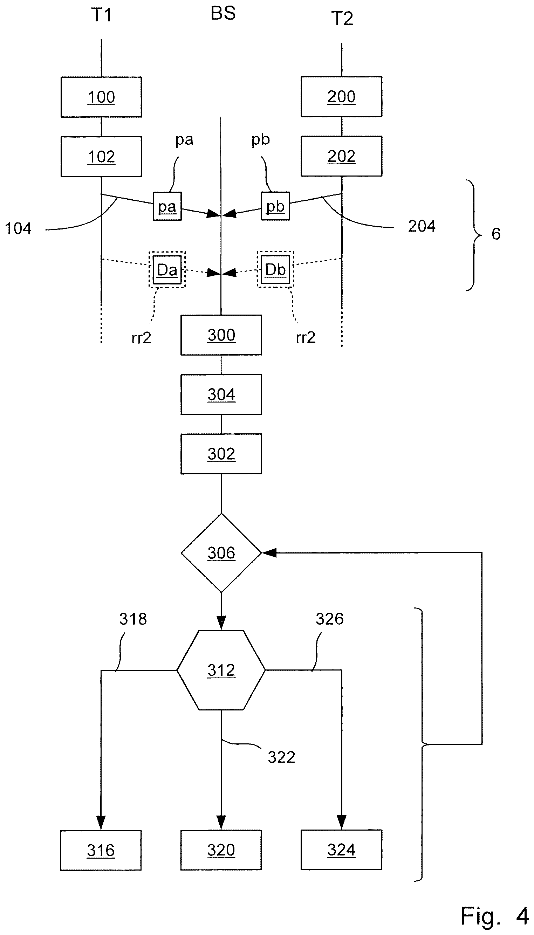

Figure 4 shows a schematic flow diagram showing a collision detection scheme for the preambles pa and pb received at the secondary radio communications device BS.

In addition to the features as outlined to figure 1 it is shown an optional one-stage transmission scheme 6 according to which data Da, Db is transmitted via the same or different secondary radio resource rr2 subsequently to the transmission of the preamble pa, pb.

In contrast to the one-stage transmission scheme 6 a two-stage transmission scheme comprises a feedback from the secondary radio communications device BS before a transmission of data Da, Db is initiated by the primary radio communications devices T1, T2. Consequently, in the 2-stage transmission scheme the subsequent transmission of data Da and Db as shown in figure 4 is omitted and performed at a later stage in response to a random access response from the secondary radio communications device BS.

Between the steps 300 and 302 a step 304 is arranged, in which time offset and/or frequency offset is determined in dependence on the detected primary preamble sequences ps1. This time offset and/or frequency offset can ameliorate the detection of the secondary preamble sequences in step 302.

The first preamble pa from the first primary radio communications device T1 is received at the secondary radio communications device BS simultaneously, that means at the same or nearly the same time, with the second preamble pb from the second primary radio communications device T2. Therefore, the probability of a collision of the preambles pa, pb is greater than zero.

In step 306 for each detected primary preamble sequence ps1 a block 312 is executed. According to the block 312 the number of detected secondary preamble sequences ps2 is examined. The secondary preamble sequences ps2 examined in block 312 are associated with the primary preamble sequence ps1 detected in block 300.

If a plurality of secondary preamble sequences ps2 has been determined, it is switched to a block 316 according to a branch 318. If only one single secondary preamble sequence ps2 has been determined, it is switched to a block 320 according to a branch 322. According to the block 320 the secondary radio communications device BS does not expect a collision and receives data via the secondary radio resource rr2.

If no secondary preamble sequence ps2 has been determined, it is switched to a block 324 according to a branch 326.

According to an embodiment the secondary radio communications device BS expects at least one secondary preamble sequence ps2 and the block 324 transmits a denial, the denial comprising a reference to the primary preamble sequence ps1.

According to an embodiment the secondary radio communications device BS expects at least one secondary preamble sequence ps2 and the block 324 does not transmit any response. Therefore the primary radio communications devices T will reinitiate a random access attempt.

According to an alternative embodiment the secondary radio communications device BS does not expect at least one secondary preamble sequence ps2 as legacy terminals not being able to transmit the secondary preamble sequence ps2 may be participate in the radio communications network 2. Therefore, the block 324 always transmits a grant, the grant comprising a reference to the detected primary preamble sequence ps1.

According to the branch 314 it is verified that a single one of the available first primary preamble sequences ps1 has been received by the secondary radio communications device BS. According to the branch 318 it is verified that a) the first secondary preamble sequence ps2a being associated with the first primary preamble sequence ps1 has been received by the secondary radio communications device BS, and b) that the second secondary preamble sequence ps2b being associated with the first primary preamble sequence ps1 has been received by the secondary radio communications device BS. Consequently when reaching the block 316 it is determined a collision of access attempts from two different primary radio communication devices T1, T2 using two different secondary preamble sequences ps2a and ps2b but a single primary preamble sequence ps1.

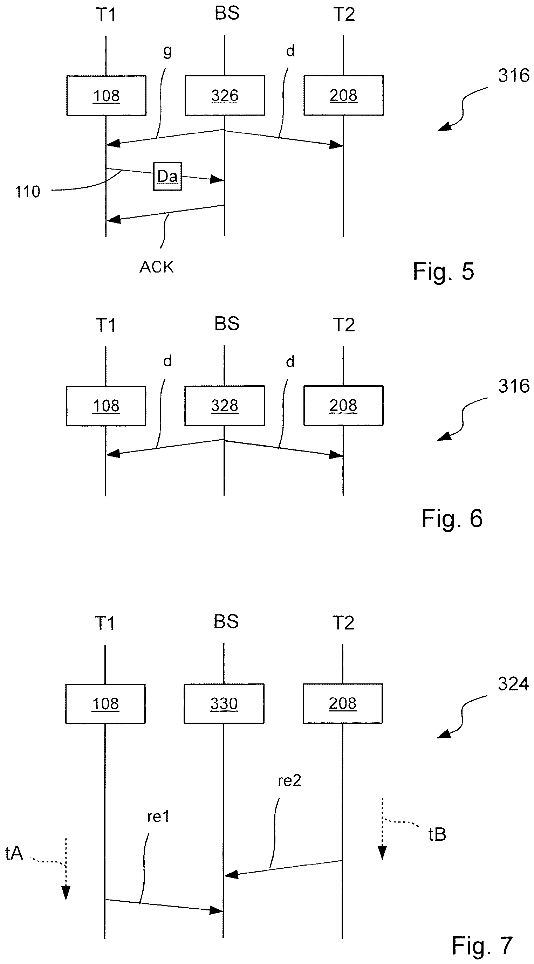

Figure 5 shows a schematic flow diagram and is an embodiment of the block 316. The primary radio communications devices T1 and T2 are monitoring in respective steps 108 and 208 whether the secondary radio communications device BS transmits a random access response. In a step 326 the secondary radio communications device BS determines a scheduling decision which results in a grant g in the sense of a random access response for the first primary radio communications device T1 to use the secondary radio resource rr2 to transmit in step 110 data D to the secondary radio communications device BS. The grant g comprises a reference to the secondary preamble sequence ps2. After successfully receiving and decoding the data Da from the first primary radio communications device T1 the secondary radio communications device BS transmits an acknowledgement ACK.

In step 326 is also determined that a denial d is transmitted to the second primary radio communications device T2, the denial comprising a reference to the secondary preamble sequence ps2. Both the grant g and the denial d are part of or can be named random access response. The grant g comprises a reference to the first secondary preamble sequence ps2a. The denial d comprises a reference to the second secondary preamble sequence ps2b.

Figure 6 shows a schematic flow diagram and is an embodiment of the block 316. The primary radio communications devices T1 and T2 are monitoring in respective steps 108 and 208 whether the secondary radio communications device BS transmits a random access response. In a step 328 the secondary radio communications device BS determines that both primary radio communications devices T1 and T2 are not allowed to transmit their data via the secondary radio resource rr2 associated with the colliding primary preamble sequence ps1. This is signalled to the primary radio communications devices T1 and T2 via a denial d. The denial d comprises a reference to the primary preamble sequence ps1 detected by the secondary radio complications device BS.

Figure 7 shows a further schematic flow diagram and is an embodiment of the block 324, wherein the secondary radio communications device BS expects a secondary preamble sequence ps2 in each preamble p. The primary radio communications devices T1 and T2 are monitoring in respective steps 108 and 208 whether the secondary radio communications device BS transmits a random access response. In a step 330 it is determined that the secondary radio communications device BS will not transmit a random access response. After a respective period in time tA, tB the respective primary radio communications devices T1, T2 will re-initiate an access attempt. Due to the omission of the random access response the terminals T1, T2 will initiate the retransmission re1, re2.

Examples of standardization documents related to the LTE standard and the LTE-A standard as well as further systems as referred to herein are the following documents, which are incorporated herein by reference:

[1] 3GPP TS 36.321 V12.7.0 2015-09,

[2] 3GPP TS 36.211 V12.7.0 2015-09.

With regard to Random Access Procedure initialization outlined in [1], it is available in the Serving Cell before the procedure can be initiated, the following information: the available set of PRACH resources (PRACH: Physical Random Access Channel) for the transmission of the Random Access Preamble in the sense of the primary preamble sequence ps1, and a set of resources for the secondary preamble sequence ps2. This information is not available in [1] as referenced, but in a potential future version of [1]. This is valid throughout the following paragraphs.

The Random Access Resource selection procedure comprises to transmit the random access preamble in the sense of the primary preamble sequence ps1 together with the secondary preamble sequence ps2. A Random Access Preamble in the sense of the primary preamble sequence ps1 may be selected randomly from a table of primary preamble sequences ps1 exemplified in figure 3. The random function shall be such that each of the allowed selections can be chosen with equal probability. Also the secondary preamble sequence ps2 associated with the selected primary preamble sequence ps1 within an associated look-up table is selected randomly exemplified in figure 3.

The Random Access Resource selection procedure shall be performed as follows: -If *ra-PreambleIndex* (Random Access Preamble in the sense of the primary preamble sequence ps1 and the associated secondary preamble sequence ps2) and ra-*PRACH-MaskIndex* (PRACH Mask Index) have been explicitly signalled and *ra-PreambleIndex* is not 000000:

- The Random Access Preamble in the sense of the primary preamble sequence ps1 and the associated secondary preamble sequence ps2 and the PRACH Mask Index are those explicitly signalled.

- else the Random Access Preamble in the sense of the primary preamble sequence ps1 and the associated secondary preamble sequence ps2 shall be selected by the MAC entity as follows:

- If Msg3 has not yet been transmitted, the MAC entity shall:

- if Random Access Preambles group B exists and if the potential message size (UL data available for transmission plus MAC header and, where required, MAC control elements) is greater than *messageSizeGroupA* and if the pathloss is less than $P_{CMAX,c}$ (of the Serving Cell performing the Random Access Procedure) - *preambleInitialReceivedTargetPower - deltaPreambleMsg3 - messagePowerOffsetGroupB,* then:

- select the Random Access Preambles group B;

- else:

- select the Random Access Preambles group A.

- else, if Msg3 is being retransmitted, the MAC entity shall:

- select the same group of Random Access Preambles as was used for the preamble transmission attempt corresponding to the first transmission of Msg3.

- randomly select a Random Access Preamble in the sense of the primary preamble sequence ps1 within the selected group. The random function shall be such that each of the allowed selections can be chosen with equal probability;

- randomly select a secondary preamble sequence ps2 associated with the selected Random Access Preamble within an associated look-up table

- set PRACH Mask Index to 0.

- determine the next available subframe containing PRACH and associated secondary preamble sequence ps2 Field e.g. in the PUSCH (PUSCH: Physical Uplink Shared Channel) permitted by the restrictions given by the *prach-ConfigIndex,* the PRACH Mask Index and physical layer timing requirements (a MAC entity may take into account the possible occurrence of measurement gaps when determining the next available PRACH subframe);

- if the transmission mode is TDD and the PRACH Mask Index is equal to zero:

- if *ra-PreambleIndex* was explicitly signalled and it was not 000000 (i.e., not selected by MAC):

- randomly select, with equal probability, one PRACH and associated secondary preamble sequence ps2 Field from the PRACHs available in the determined subframe.

- else:

- randomly select, with equal probability, one PRACH and associated secondary preamble sequence ps2 Field from the PRACHs available in the determined subframe and the next two consecutive subframes.

- else:

- determine a PRACH and associated secondary preamble sequence ps2 Field within the determined subframe in accordance with the requirements of the PRACH Mask Index.

- proceed to the transmission of the Random Access Preamble (see subclause 5.1.3 of [2]).
  The random-access procedure of [2] shall be performed as follows: - set PREAMBLE_RECEIVED_TARGET_POWER to *preambleInitialReceivedTargetPower* + DELTA_PREAMBLE + (PREAMBLE_TRANSMISSION_COUNTER - 1) * *powerRampingStep;*

- instruct the physical layer to transmit a preamble p comprising the primary and secondary preamble sequences ps1 and ps 2 using the selected PRACH and associated secondary preamble sequence ps2 Field, corresponding RA-RNTI, preamble index in the sense of a primary preamble sequence index, secondary preamble sequence index, and PREAMBLE_RECEIVED_TARGET_POWER.

Accodring to the random access response reception of [3] once the Random Access Preamble according to the primary preamble sequence ps1 and its associated secondary preamble sequence ps2 are transmitted and regardless of the possible occurrence of a measurement gap, the MAC entity shall monitor the PDCCH of the SpCell for Random Access Response(s) identified by the RA-RNTI defined below, in the RA Response window which starts at the subframe that contains the end of the preamble transmission plus three subframes and has length *ra-ResponseWindowSize* subframes.

An embodiment of the time and frequency structure of the Physical random access channel according to [2] is exemplified in the following. The physical layer secondary preamble sequence ps2 is a Gold code of length 2N - 1. The secondary preamble sequence ps2 is mapped on PUSCH resource elements specified by prachext-ConfigIndex. The last OFDM symbol of the resources specified by prachext-ConfigIndex remains empty. The first and the last two subcarriers of the resources specified by prachext-ConfigIndex remain empty. The transmission of a random access preamble in the sense of the first preamble sequence ps1 and the associated second preamble sequence ps2, if triggered by the MAC layer, is restricted to certain time and frequency resources. These resources are enumerated in increasing order of the subframe number within the radio frame and the physical resource blocks in the frequency domain such that index 0 correspond to the lowest numbered physical resource block and subframe within the radio frame. PRACH resources within the radio frame are indicated by a PRACH Resource Index, where the indexing is in the order of appearance in Table 5.7.1-2 and Table 5.7.1-4. For frame structure type 1 with preamble format 0-3, there is at most one random access resource per subframe (including both the primary preamble sequence ps1 and the secondary preamble sequence ps2) .

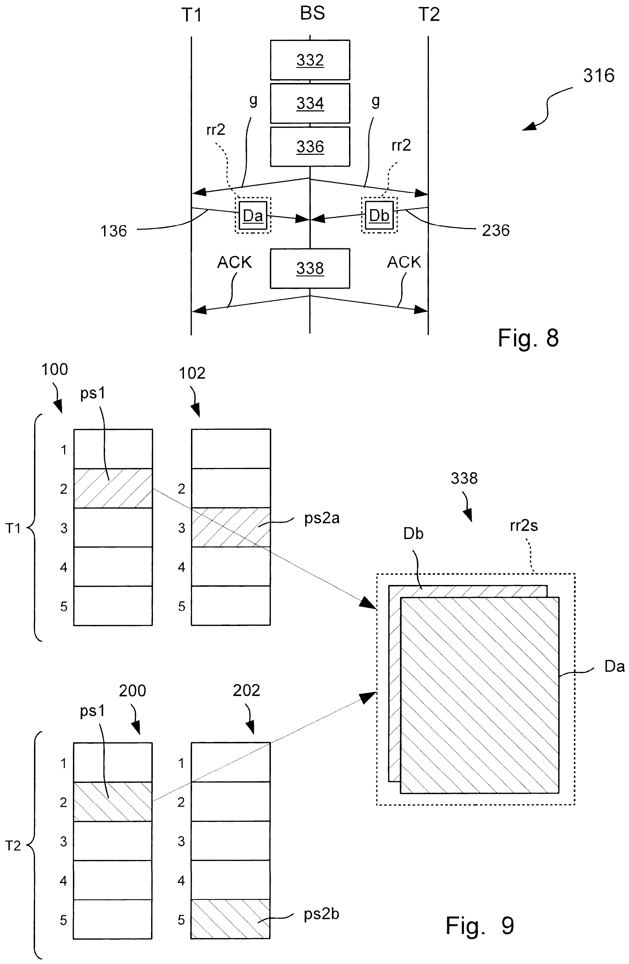

Figure 8 shows a further schematic flow diagram and is an embodiment of the block 316 implementing a two-stage communication scheme. The secondary radio communications device BS performs in the step 332 an estimation of the first channel UL1 between the first primary radio communications device T1 and the secondary radio communications device BS in dependence on the first secondary preamble sequence ps2a. In a step 334 the secondary radio communications device BS performs an estimation of the second channel UL2 between the second primary radio communications device T2 and the secondary radio communications device BS in dependence on the second secondary preamble sequence ps2b. A correlation value is determined in step 336 by the secondary radio communications device BS by comparing the channel estimations of the first and second channel UL1, UL2. Furthermore, in step 336 it is determined, that the first and second channels UL1 and UL2 differ sufficiently, so that the secondary radio communications device BS transmits a grant g with a reference to the primary preamble sequence ps1.

The secondary radio communications device BS receives according to the steps 136 and 236 first and second data Da, Db from the first primary radio communications device T1 and T2 as an answer to the grant g. Both data Da and Db are superimposed via the same secondary radio resource rr2.

In a step 338 the secondary radio communications device BS tries to decode the superimposed first and second data Da, Db, if the first and second channel UL1, UL2 are assumed to be sufficiently uncorrelated based on the determined correlation value. Therefore multi user detection is performed and in step 338 for example a successive interference cancellation receiver can be used to decode the data Da, Db. Especially the knowledge of the number of data being superimposed via the secondary radio resource rr2 can be used for successfully decoding the data Da, Db. The number of superimposed data Da, Db is equal to the number of successfully detected secondary preamble sequences ps2 in step 302.

For a successful multi user detection and decoding of data Da and Db in step 338 the primary radio communications devices T1 and T2 determine a demodulation reference signal sequence for the steps 136 and 236 in dependence of a received signal, especially a downlink signal, that identifies the secondary radio resource rr2s for transmission and in dependence of the respective selected secondary preamble sequence ps2 or a corresponding identification used in the respective preamble p. Additionally the demodulation reference signal sequence may depend on the primary preamble sequence ps1 or a respective identification.

After the step 336 a random access response can be optionally transmitted to the primary radio communications devices T1 and T2 in the sense of the 2-stage communication scheme to grant the secondary radio resource rr2s. This grant comprises a reference to the detected secondary preamble sequence ps2 of the respective primary radio communications device T1, T2. Consequently, it is also possible to grant the same secondary radio resource rr2s to only a fraction or subset of primary radio communications terminals T1, T2.

In the one-stage and two-stage schemes the ACK/NAK after the step of 338 comprises a reference to the detected secondary preamble sequences ps2 for feedback specific to the primary radio communications device T1, T2. In the one-stage scheme the transmission of the grant g is omitted.

Figure 9 illustrates schematically the steps 100, 102, 200, 202 of figure 1 and step 338 of figure 8. It is assumed the case that both primary radio communications devices T1 and T2 select the same primary preamble sequence ps1 which is associated with the secondary radio resource rr2s. As both primary radio communications devices T1 and T2 select different secondary preamble sequences ps2a, ps2b this information can be used by the secondary radio communications device BS to differ between the superimposed data Da and Db for their successful decoding.

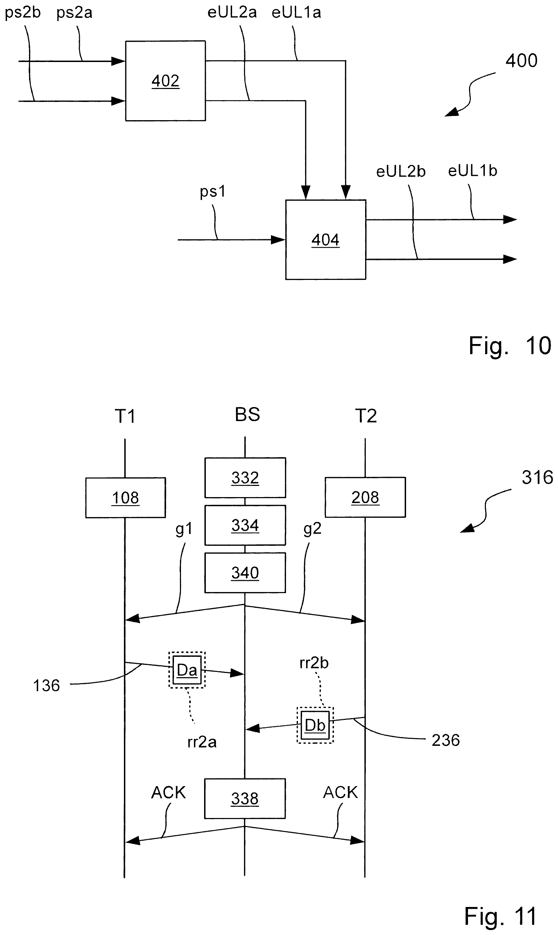

Figure 10 shows schematically a block diagram 400 for channel estimation. This channel estimation scheme can be seen as a part of an iterative channel estimation further improving channel knowledge in each iteration. It is assumed that the secondary radio communications device BS comprises a plurality of receive antennas to achieve separation by using the spatio-temporal structure of the secondary preamble sequences ps2 by applying subspace methods and/or spatial filtering. The received and detected first and second secondary preamble sequences ps2a and ps2b are applied to a block 402 for an initial channel estimation. The block 402 determines first estimates eULla and eUL2a for the respective channels eUL1 and eUL2.

The first estimates eULla and eUL2a and also the received primary preamble sequence ps1 are applied to a block 404 to exploit the superimposed signals of the primary preamble sequence ps1 from the two primary radio communications devices T1, T2. The block 404 determines further estimates UL1b and UL2b of the respective channels UL1, UL2.

In the following a channel estimation example is described. The primary preamble sequence ps1 indexed k is received at antenna n of Z antennas. With a correlation based receiver the obtained correlations as a function of time lag $\tau$ are $\rho_{k,n}(\tau)$. Scanning for the dominant components of the channel impulse response across all antennas means

$$\sum_{n=1}^{Z} \left| \rho_{k,n}(\tau) \right|^2 \; .$$

finding maxima of In case of primary preamble sequence ps1 collision k, e.g. two primary radio communications devices T1, T2 have transmitted, both using k, superpositions are observed which contain the channel impulse responses of both primary radio communications devices T1, T2.

An exemplary strategy is to analyze the correlation outcomes $\tilde{\rho}_{T1,n}(\tau)$ and $\tilde{\rho}_{T2,n}(\tau)$ of the received secondary preamble sequences ps2a, ps2b for the primary radio communications devices T1 and T2, respectively. For a certain time lag corresponding to the *l*-th temporal peak the outcomes $\tilde{\rho}_{T1,n}(\tau)$ and $\tilde{\rho}_{T2,n}(\tau)$ of the received secondary preamble sequences ps2a, ps2b are used as antenna weights for the reception of the primary preamble sequences ps1 for spatial filtering / receive beamforming in order to separate in a later step the received data Da, Db spatially. The weights for the primary radio communications device T1 are e.g. $w_{T1,n} = \tilde{\rho}_{T1,n}^*(\tau_l)$ in the simple MRC beamforming case. In a further embodiment, zero forcing or MMSE combining can be used.

For identifying the relevant components of the primary radio communications device T1, coherent combining of the primary preamble sequence correlations across all antennas Z with the appropriate antenna weights is carried out according to equation 1.

$$\rho_{T1,n}^{[combined]} = \left| \sum_{n=1}^{Z} w_{T1,n} \cdot \rho_{k,n}(\tau_l) \right|^2 \qquad (1)$$

Now a few correlation peaks for the spatially filtered combined correlation $\rho_{T1,n}^{[combined]}$ above a certain threshold can be identified. With these peaks, an estimate of the channel impulse response of the first primary radio communications device T1 can be synthesized.

Even if this result now contains some artifacts from the second primary radio communications device T2, it is assumed to be a better starting point for an initial channel estimation than the estimate obtained from the secondary preamble sequence ps2 alone, as the received primary preamble sequences ps1 contain significantly more radio resource elements.

Figure 11 shows a further schematic flow diagram as an embodiment of block 316. After the steps 332 and 334 it is determined in step 340 that the first and second channel UL1 and UL2 are assumed to be not sufficiently uncorrelated based on the determined correlation value. This implies that a multi user detection in the sense of decoding different data Da and Db superimposed via the same secondary radio resource rr2 may fail.

A grant g1 is transmitted to the first primary radio communications device T1 to transmit data Da via a first secondary radio resource rr2a. A grant g2 is transmitted to the second primary radio communications device T2 to transmit data Db via a second secondary radio resource rr2b. Both the first and second secondary radio resource rr2a, rr2b are selected to be disjoint.

The transmission of data Da, Db is shown with a difference in time. However, this shown difference in time is intended only to show that the secondary radio resource rr2a, rr2b are disjoint. A simultaneous transmission of data Da, Db is also possible with a difference in frequency domain and/or code domain.

After successfully decoding the data Da, Db in step 338 acknowledgement ACK is transmitted by the secondary radio communications device BS including a reference to the respective secondary preamble sequences ps2a, ps2b.

Figure 12 shows a further schematic flow diagram of an embodiment. In this case the first and second primary radio communications devices T1 and T2 transmit non-colliding primary preamble sequences ps1a, ps1b via the same primary radio resource rr1. Therefore, in the step 342 the scheduling decision is to grant the same secondary radio resource rr2 to both primary radio communications devices T1 and T2.

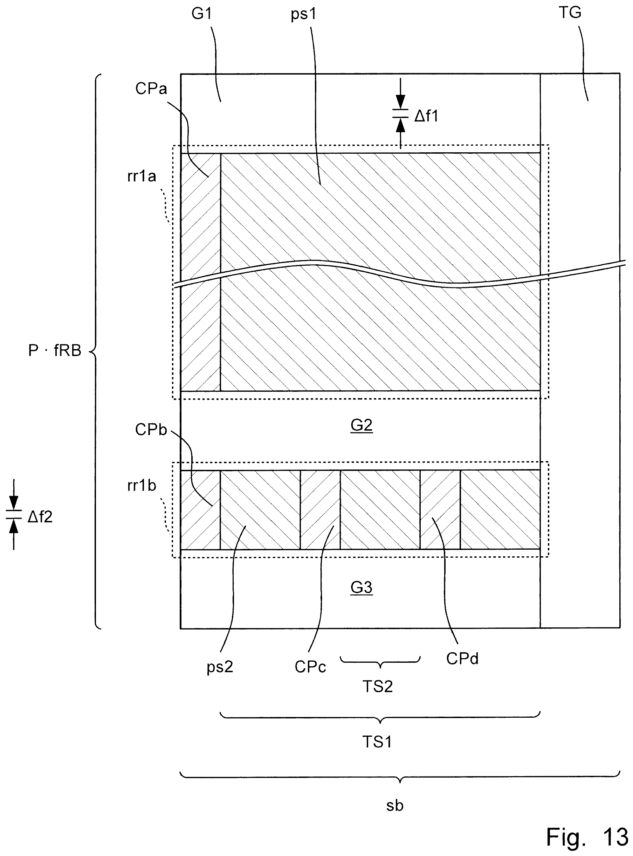

Figure 13 shows an exemplary radio frame for example for upcoming standard 5G. It is shown one sub frame sb in time dimension and P=4 resource blocks, RB, in frequency dimension). fRB is the bandwidth of one RB. It is assumed a multi-carrier system with subcarrier spacing $\Delta$f1 for the primary preamble sequence ps1 and $\Delta$f2 = k $\Delta$f1 for the secondary preamble sequence ps2 in an extension field. Different subcarrier spacings lead to different symbol lengths TS1= 800 $\mu$s and TS2= 100 $\mu$s for the case of k=8. The shown allocation of P RBs is equivalent to the bandwidth of Z=576 subcarriers with spacing $\Delta$f1. However, the primary preamble sequence requires only L subcarriers. L must fulfill certain conditions depending on the applied type of preamble, e.g. $L = 2^n-1$ in the case of m-sequences, i.e. a possible value for L is 255 and the next higher allowed value is L = 511.

Consequently, a certain number (Z-L) of subcarriers is in LTE today empty and utilized as guard band between the legacy preamble sequence and adjacent data allocations. It is proposed to utilize a subset S=40 of the Z-L unused subcarriers for the secondary preamble sequences ps2, and the remaining Z-L-S subcarriers as guard bands with bandwidths G1$\Delta$f1, G2$\Delta$f1, and G3$\Delta$f1 with G1 = 8, G2 = 9 and G3 = 8. Advantageously, this scheme does not introduce additional overhead in the sense of radio resource consumption as the guard bands are used.

The guard period TG is needed to protect the data in subsequent subframes from delayed preamble reception due to a long round-trip time, if the primary radio communications device T1, T2 is located far from the secondary radio communications device BS. The cyclic prefix CP avoids inter-symbol-interference due to multipath propagation.

The primary radio communications device T1, T2 transmits the primary preamble sequence ps1 via the first primary radio resource rr1a, especially the first primary uplink radio resource and transmits the secondary preamble sequence ps2 via the second primary radio resource rr1b, especially the second primary uplink radio resource. The secondary radio communications device BS determines according to the block 316 a collision of access attempts from the first and second primary communication devices T1, T2 in case of simultaneous receipt of a first preamble pa from the first primary radio communications device T1 and a second preamble pb from the second primary radio communications device T2.

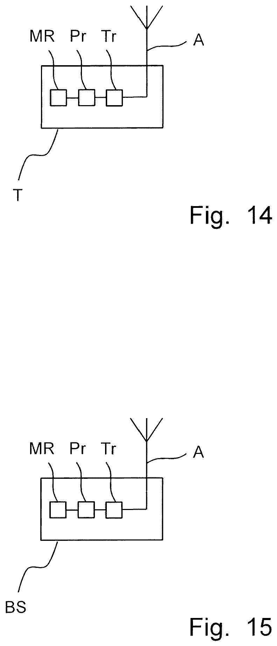

Figure 14 shows a schematic block diagram of the primary radio communications device T. The primary radio communications devices T comprises the at least one processor Pr, the at least one computer readable medium MR, the at least one transceiver Tr and the at least one antenna A. Examples for the at least one processor Pr comprise: a FPFA (Field Programmable Function Array), an ASIC (Application Specific Integrated Circuit), DSP (Digital Signal Processor), etc. Examples for the at least one computer-readable medium MR comprise: RAM (Random Access Memory), EEPROM (Electrically erasable Programmable Read-Only Memory), etc.

Figure 15 shows a schematic block diagram of the secondary radio communications device BS. The secondary radio communications devices BS comprises the at least one processor Pr, the at least one computer readable medium MR, the at least one transceiver Tr and the at least one antenna A. Examples for the at least one processor Pr comprise: a FPFA (Field Programmable Function Array), an ASIC (Application Specific Integrated Circuit), DSP (Digital Signal Processor), etc. Examples for the at least one computer-readable medium MR comprise: RAM (Random Access Memory), EEPROM (Electrically erasable Programmable Read-Only Memory), etc.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

At least parts of the above described radio communications network including base stations could be implemented using network functions virtualization (NFV). NFV is a network architecture that makes use of technologies of computer virtualization. Entire network nodes like base stations or parts thereof or part of their functions can be virtualized using software building blocks that may connect, or interact, to create communication services. A virtualized network function of e.g. a base station may include at least one virtual machine running different software and processes, on top of standard high-volume servers, switches and storage, or a cloud computing infrastructure, instead of having customized hardware appliances for each network function. As such a base station function may be implemented using a computer program product embodied on a non-transitory computer readable medium (M) for performing operations, wherein the computer program product comprises instructions, that when executed by a processor (Pr), perform the operations of the specific base station function.

## Claims

1. A primary radio communications device (T1; T2), especially a terminal, for a radio communications network (2), the primary radio communications device (T1; T2) including a processor (Pr) being configured to:

   - determine (100; 200) a primary preamble sequence (ps1; ps1a; ps1b) with a first sequence property,
   - determine (102; 202) a secondary preamble sequence (ps2; ps2a; ps2b) with a second sequence property associated with the first sequence property, wherein the second sequence property of the secondary preamble sequence (ps2) is mathematically relaxed with respect to the first sequence property of the primary preamble sequence (ps1) regarding the capability to derive accurate frequency- and/or time-offsets of a preamble (p; pa; pb), and wherein the secondary preamble sequence (ps2) is shorter than the primary preamble sequence (ps1); and

   including a transceiver (Tr) being configured to:

   - transmit (104; 204) the preamble (p; pa; pb) comprising the primary preamble sequence (ps1; ps1a; ps1b) and the secondary preamble sequence (ps2; ps2a; ps2b) to a secondary radio communications device (BS), especially a base station.

2. The primary radio communications device (T1; T2) according to claim 1, the primary radio communications device (T1; T2) being further configured to:

transmit (104; 204) the primary preamble sequence (ps1) via a first primary radio resource (rr1a), especially a first primary uplink radio resource; and
transmit (104; 204) the secondary preamble sequence (ps2) via a second primary radio resource (rr1b), especially a second primary uplink radio resource.

3. The primary radio communications device (T1; T2) according to one of the preceding claims, wherein a group of secondary preamble sequences (ps2) is associated with one single primary preamble sequence (ps1) .

4. The primary radio communications device (T1; T2) according to one of the preceding claims, wherein a denial (d) comprising a reference to the secondary preamble sequence (ps2) is received.

5. The primary radio communications device (T1; T2) according to one of the preceding claims, wherein a grant (g) comprising a reference to the secondary preamble sequence (ps2) is received, and wherein data (Da) is transmitted in response to the grant (g).

6. The primary radio communications device (T1; T2) according to one of the preceding claims, wherein the primary preamble sequence (ps1) is selected from a table with a limited number of predefined primary preamble sequences (1 ... N), and the secondary preamble sequence (ps2) is selected from a table with a limited number of predefined secondary preamble sequences (1 ... NM) .

7. The primary radio communications device (T1; T2) according to the preceding claim, wherein the primary preamble sequence (ps1) is selected randomly from the table with the limited number of predefined primary preamble sequences (1 ... N), and the secondary preamble sequence (ps2) is selected randomly from the table with the limited number of predefined secondary preamble sequences (1 ... NM) .

8. The primary radio communications device (T1; T2) according to one of the claims 1 to 6, wherein the secondary preamble sequence (ps2a) is determined according to a priority class of the primary radio communications device (T1; T2) or a service running on the primary radio communications device (T1; T2).

9. The primary radio communications device (T1; T2) according to one of the preceding claims, wherein the secondary preamble sequence (ps2) is transmitted via a subset of a certain number of LTE subcarriers of a LTE guard band between a LTE preamble sequence and adjacent data allocations.

10. A secondary radio communications device (BS), especially a base station, for a radio communications network (2), the secondary radio communications device (BS) including a transceiver (Tr) being configured to:

- receive (104; 204) a preamble (p; pa, pb) from at least one primary radio communications device (T1; T2), especially a terminal, via a primary radio resource (rr1), especially a primary uplink radio resource; and

including a processor (Pr) being configured to:

- verify (300) that a primary preamble sequence (ps1; ps1a; ps1b) is present in the preamble (p; pa, pb), wherein the primary preamble sequence (ps1; ps1a; ps1b) has a first sequence property; and
- verify (302) that a secondary preamble sequence (ps2; ps2a; ps2b) is present in the preamble (p; pa, pb), wherein the secondary preamble sequence (ps2; ps2a; ps2b) has a second sequence property associated with the first sequence property, wherein the second sequence property of the secondary preamble sequence (ps2) is mathematically relaxed with respect to the first sequence property of the primary preamble sequence (ps1) regarding the capability to derive accurate frequency-and/or time-offsets of the preamble (p; pa; pb), and wherein the secondary preamble sequence (ps2) is shorter than the primary preamble sequence (ps1).

11. The secondary radio communications device (BS) according to claim 10, the secondary radio communications device (BS) being configured to:

- determine (316) a collision of access attempts from the first and second primary communication devices (T1, T2) in case of simultanous receipt of a first preamble (pa) from a first primary radio communications device (T1)

and a second preamble (pb) from a second primary radio communications device (T2), the determining (316) comprising:

- verifying (314) that a first primary preamble sequence (ps1) has been received,
- verifying (318) that a first secondary preamble sequence (ps2a) being associated with the first primary preamble sequence (ps1) has been received, and
- verifying (318) that a second secondary preamble sequence (ps2b) being associated with the first primary preamble sequence (ps1) has been received.

12. The secondary radio communications device (BS) according to claim 11, the secondary radio communications device (BS) being configured to:

- perform (332) an estimation of a first channel (UL1), especially a first uplink channel, between the first primary radio communications device (T1) and the secondary radio communications device (BS) in dependence on the first secondary preamble sequence (ps2a);
- perform (334) an estimation of a second channel (UL2), especially a second uplink channel, between the second primary radio communications device (T2) and the secondary radio communications device (BS) in dependence on the second secondary preamble sequence (ps2b); and

determining a correlation value by comparing the estimations of the first and second channel (Ull, UL2) .

13. The secondary radio communications device (BS) according to claim 12, the secondary radio communications device (BS) being configured to:

- receive (136, 236) first data (Da) from the first primary radio communication device (T1) and second data (Db) from the second primary radio communication device (T2), the first and second data being superimposed, via a same secondary radio resource (rr2), especially a same secondary uplink radio resource;
- decoding (338), if the first and second channel (UL1, UL2) are assumed to be uncorrelated based on the determined correlation value, the superimposed first and second data (Da, Db).

14. The secondary radio communications device (BS) according to claim 12, the secondary radio communications device (BS) being configured to:

- granting (g), if the first and second channels (UL1, UL2) are assumed to be not uncorrelated based on the determined correlation value:

    a first secondary radio resource (rr2a) for data transmission by the first primary radio communications device (T1), and
    a second secondary radio resource (rr2b) for data transmission by the second primary radio communications device (T2).

15. A method to operate a radio communications network (2), the method comprising:

- receiving (104; 204) a preamble (p; pa, pb) from at least one primary radio communications device (T1; T2), especially a terminal, via a primary radio resource (rr1), especially a primary uplink radio resource;
- verifying (300) that a primary preamble sequence (ps1; ps1a; ps1b) is present in the preamble (p; pa, pb), wherein the primary preamble sequence (ps1; ps1a; ps1b) has a first sequence property; and
- verifying (302) that a secondary preamble sequence (ps2; ps2a; ps2b) is present in the preamble (p; pa, pb), wherein the secondary preamble sequence (ps2; ps2a; ps2b) has a second sequence property associated with the first sequence property, wherein the second sequence property of the secondary preamble sequence (ps2) is mathematically relaxed with respect to the first sequence property of the primary preamble sequence (ps1) regarding the capability to derive accurate frequency-and/or time-offsets of the preamble (p; pa; pb), and wherein the secondary preamble sequence (ps2) is shorter than the primary preamble sequence (ps1).

16. A computer program product embodied on a non-transitory computer readable medium (MR) for performing operations, wherein the computer program product comprises instructions, that when executed by a processor (Pr), perform the operations of a method according to the preceding claim.

**Patentansprüche**

1. Primäre Funkkommunikationsvorrichtung (T1; T2), insbesondere ein Endgerät, für ein Funkkommunikationsnetz (2), wobei die erste Funkkommunikationsvorrichtung (T1; T2) einen Prozessor (Pr) aufweist, der ausgelegt ist zum:

   - Bestimmen (100; 200) einer primären Präambelsequenz (ps1; ps1a; ps1b) mit einer ersten Sequenzeigenschaft,
   - Bestimmen (102; 202) einer sekundären Präambelsequenz (ps2; ps2a; ps2b) mit einer zweiten Sequenzeigenschaft, die mit der ersten Sequenzeigenschaft verknüpft ist, wobei die zweite Sequenzeigenschaft der sekundären Präambelsequenz (ps2) in Bezug auf die erste Sequenzeigenschaft der primären Präambelsequenz (ps1) hinsichtlich der Fähigkeit, genaue Frequenz- und/oder Zeitversätze einer Präambel (p; pa; pb) abzuleiten, mathematisch entspannt ist, und wobei die sekundäre Präambelsequenz (ps2) kürzer ist als die primäre Präambelsequenz (ps1); und

   einen Sendeempfänger (Tr) aufweist, der ausgelegt ist zum:
   Senden (104; 204) der Präambel (p; pa; pb), umfassend die primäre Präambelsequenz (ps1; ps1a; ps1b) und die sekundäre Präambelsequenz (ps2; ps2a; ps2b), an eine sekundäre Funkkommunikationsvorrichtung (BS), insbesondere eine Basisstation.

2. Primäre Funkkommunikationsvorrichtung (T1; T2) gemäß Anspruch 1, wobei die primäre Funkkommunikationsvorrichtung (T1; T2) ferner ausgelegt ist zum:

   - Senden (104; 204) der primären Präambelsequenz (ps1) über eine erste primäre Funkressource (rr1a), insbesondere eine primäre Uplink-Funkressource; und Senden (104; 204) der sekundären Präambelsequenz (ps2) über eine zweite primäre Funkressource (rr1b), insbesondere eine zweite primäre Uplink-Funkressource.

3. Primäre Funkkommunikationsvorrichtung (T1; T2) gemäß einem der vorstehenden Ansprüche, wobei eine Gruppe von sekundären Präambelsequenzen (ps2) mit einer einzelnen primären Präambelsequenz (ps1) verknüpft ist.

4. Primäre Funkkommunikationsvorrichtung (T1; T2) gemäß einem der vorstehenden Ansprüche, wobei eine Verweigerung (d), umfassend einen Verweis auf die sekundäre Präambelsequenz (ps2), empfangen wird.

5. Primäre Funkkommunikationsvorrichtung (T1; T2) gemäß einem der vorstehenden Ansprüche, wobei eine Gewährung (g), umfassend einen Verweis auf die sekundäre Präambelsequenz (ps2), empfangen wird und wobei Daten (Da) in Reaktion auf die Gewährung (g) gesendet werden.

6. Primäre Funkkommunikationsvorrichtung (T1; T2) gemäß einem der vorstehenden Ansprüche, wobei die primäre Präambelsequenz (ps1) aus einer Tabelle mit einer begrenzten Anzahl von vordefinierten primären Präambelsequenzen (1 ... N) ausgewählt wird und die sekundäre Präambelsequenz (ps2) aus einer Tabelle mit einer begrenzten Anzahl von vordefinierten sekundären Präambelsequenzen (1 ... NM) ausgewählt wird.

7. Primäre Funkkommunikationsvorrichtung (T1; T2) gemäß einem der vorstehenden Ansprüche, wobei die primäre Präambelsequenz (ps1) zufällig aus der Tabelle mit der begrenzten Anzahl von vordefinierten primären Präambelsequenzen (1 ... N) ausgewählt wird und die sekundäre Präambelsequenz (ps2) zufällig aus der Tabelle mit der begrenzten Anzahl von vordefinierten sekundären Präambelsequenzen (1 ... NM) ausgewählt wird.

8. Primäre Funkkommunikationsvorrichtung (T1; T2) gemäß einem der Ansprüche 1 bis 6, wobei die sekundäre Präambelsequenz (ps2a) gemäß einer Prioritätsklasse der primären Funkkommunikationsvorrichtung (T1; T2) oder eines auf der primären Funkkommunikationsvorrichtung (T1; T2) ausgeführten Dienstes bestimmt wird.

9. Primäre Funkkommunikationsvorrichtung (T1; T2) gemäß einem der vorstehenden Ansprüche, wobei die sekundäre Präambelsequenz (ps2) über eine Teilmenge einer bestimmten Anzahl von LTE-Unterträgern eines LTE-Schutzbandes zwischen einer LTE-Präambelsequenz und benachbarten Datenzuteilungen gesendet wird.

10. Sekundäre Funkkommunikationsvorrichtung (BS), insbesondere eine Basisstation, für ein Funkkommunikationsnetz (2), wobei die sekundäre Funkkommunikationsvorrichtung (BS) einen Sendeempfänger (Tr) aufweist, der ausgelegt ist zum:

- Empfangen (104; 204) einer Präambel (p; pa, pb) von wenigstens einer primären Funkkommunikationsvorrichtung (T1; T2), insbesondere einem Endgerät, über eine primäre Funkressource (rr1), insbesondere eine primäre Uplink-Funkressource; und

einen Prozessor (Pr) aufweist, der ausgelegt ist zum:

- Verifizieren (300), dass eine primäre Präambelsequenz (ps1; ps1a; ps1b) in der Präambel (p; pa, pb) vorliegt, wobei die primäre Präambelsequenz (ps1; ps1a; ps1b) eine erste Sequenzeigenschaft aufweist; und
- Verifizieren (302), dass eine sekundäre Präambelsequenz (ps2; ps2a; ps2b) in der Präambel (p; pa, pb) vorliegt, wobei die sekundäre Präambelsequenz (ps2; ps2a; ps2b) eine zweite Sequenzeigenschaft aufweist, die mit der ersten Sequenzeigenschaft verknüpft ist, wobei die zweite Sequenzeigenschaft der sekundären Präambelsequenz (ps2) in Bezug auf die erste Sequenzeigenschaft der primären Präambelsequenz (ps1) hinsichtlich der Fähigkeit, genaue Frequenz- und/oder Zeitversätze der Präambel (p; pa; pb) abzuleiten, mathematisch entspannt ist, und wobei die sekundäre Präambelsequenz (ps2) kürzer ist als die primäre Präambelsequenz (ps1).

11. Sekundäre Funkkommunikationsvorrichtung (BS) gemäß Anspruch 10, wobei die sekundäre Funkkommunikationsvorrichtung (BS) ausgelegt ist zum:

- Bestimmen (316) eines Konfliktes von Zugriffsversuchen von der ersten und der zweiten primären Funkkommunikationsvorrichtung (T1, T2) im Falle eines gleichzeitigen Empfangs einer ersten Präambel (pa) von einer ersten Funkkommunikationsvorrichtung (T1) und einer zweiten Präambel (pb) von einer zweiten primären Funkkommunikationsvorrichtung (T2), wobei das Bestimmen (316) umfasst:

    - Verifizieren (314), dass eine erste primäre Präambelsequenz (ps1) empfangen worden ist,
    - Verifizieren (318), dass eine erste sekundäre Präambelsequenz (ps2a), die mit der ersten primären Präambelsequenz (ps1) verknüpft ist, empfangen worden ist, und
    - Verifizieren (318), dass eine zweite sekundäre Präambelsequenz (ps2b), die mit der ersten primären Präambelsequenz (ps1) verknüpft ist, empfangen worden ist.

12. Sekundäre Funkkommunikationsvorrichtung (BS) gemäß Anspruch 11, wobei die sekundäre Funkkommunikationsvorrichtung (BS) ausgelegt ist zum:

- Durchführen (332) einer Schätzung eines ersten Kanals (UL1), insbesondere eines ersten Uplink-Kanals, zwischen der ersten primären Funkkommunikationsvorrichtung (T1) und der sekundären Funkkommunikationsvorrichtung (BS) in Abhängigkeit von der ersten sekundären Präambelsequenz (ps2a);
- Durchführen (334) einer Schätzung eines zweiten Kanals (UL2), insbesondere eines zweiten Uplink-Kanals, zwischen der zweiten primären Funkkommunikationsvorrichtung (T2) und der sekundären Funkkommunikationsvorrichtung (BS) in Abhängigkeit von der zweiten sekundären Präambelsequenz (ps2b); und Bestimmen eines Korrelationswertes durch Vergleichen der Schätzungen des ersten und des zweiten Kanals (UL1, UL2).

13. Sekundäre Funkkommunikationsvorrichtung (BS) gemäß Anspruch 12, wobei die sekundäre Funkkommunikationsvorrichtung (BS) ausgelegt ist zum:

- Empfangen (136, 236) von ersten Daten (Da) von der ersten primären Funkkommunikationsvorrichtung (T1) und von zweiten Daten (Db) von der zweiten primären Funkkommunikationsvorrichtung (T2), wobei die ersten und die zweiten Daten überlagert sind, über ein und dieselbe sekundäre Funkressource (rr2), insbesondere ein und dieselbe sekundäre Uplink-Funkressource;
- Decodieren (338), falls der erste und der zweite Kanal (UL1, UL2) basierend auf dem bestimmten Korrelationswert als unkorreliert angenommen werden, der überlagerten ersten und zweiten Daten (Da, Db).

14. Sekundäre Funkkommunikationsvorrichtung (BS) gemäß Anspruch 12, wobei die sekundäre Funkkommunikationsvorrichtung (BS) ausgelegt ist zum:

- Gewähren (g), falls der erste und der zweite Kanal (UL1, UL2) basierend auf dem bestimmten Korrelationswert als nicht unkorreliert angenommen werden:

    einer ersten sekundären Funkressource (rr2a) zur Datenübertragung durch die erste primäre Funkkommunikationsvorrichtung (T1), und

einer zweiten sekundären Funkressource (rr2b) zur Datenübertragung durch die zweite primäre Funkkommunikationsvorrichtung (T2).

15. Verfahren zum Betreiben eines Funkkommunikationsnetzes (2), wobei das Verfahren umfasst:

- Empfangen (104; 204) einer Präambel (p; pa, pb) von wenigstens einer primären Funkkommunikationsvorrichtung (T1; T2), insbesondere einem Endgerät, über eine primäre Funkressource (rr1), insbesondere eine primäre Uplink-Funkressource;
- Verifizieren (300), dass eine primäre Präambelsequenz (ps1; ps1a; ps1b) in der Präambel (p; pa, pb) vorliegt, wobei die primäre Präambelsequenz (ps1; ps1a; ps1b) eine erste Sequenzeigenschaft aufweist; und
- Verifizieren (302), dass eine sekundäre Präambelsequenz (ps2; ps2a; ps2b) in der Präambel (p; pa, pb) vorliegt, wobei die sekundäre Präambelsequenz (ps2; ps2a; ps2b) eine zweite Sequenzeigenschaft aufweist, die mit der ersten Sequenzeigenschaft verknüpft ist, wobei die zweite Sequenzeigenschaft der sekundären Präambelsequenz (ps2) in Bezug auf die erste Sequenzeigenschaft der primären Präambelsequenz (ps1) hinsichtlich der Fähigkeit, genaue Frequenz- und/oder Zeitversätze der Präambel (p; pa; pb) abzuleiten, mathematisch entspannt ist, und wobei die sekundäre Präambelsequenz (ps2) kürzer ist als die primäre Präambelsequenz (ps1).

16. Computerprogrammprodukt, das auf einem nichttransitorischen computerlesbaren Medium (MR) zum Durchführen von Operationen realisiert ist, wobei das Computerprogrammprodukt Anweisungen umfasst, die, wenn sie von einem Prozessor (Pr) ausgeführt werden, die Operationen eines Verfahrens gemäß dem vorstehenden Anspruch durchführen.

**Revendications**

1. Dispositif de communication radio primaire (T1 ; T2), en particulier d'un terminal, pour un réseau de communication radio (2), le dispositif de communication radio primaire (T1 ; T2) comprenant un processeur (Pr) configuré pour :

- déterminer (100 ; 200) une séquence de préambule primaire (ps1 ; ps1a ; ps1b) ayant une première propriété de séquence,
- déterminer (102 ; 202) une séquence de préambule secondaire (ps2 ; ps2a ; ps2b) ayant une seconde propriété de séquence associée à la première propriété de séquence, dans lequel la seconde propriété de séquence de la séquence de préambule secondaire (ps2) est mathématiquement relaxée par rapport à la première propriété de séquence de la séquence de préambule primaire (ps1) en ce qui concerne la capacité à dériver des décalages de fréquence et/ou de temps précis d'un préambule (p ; pa ; pb), et dans lequel la séquence de préambule secondaire (ps2) est plus courte que la séquence de préambule primaire (ps1) ; et

comprenant un émetteur-récepteur (Tr) configuré pour :

- émettre (104 ; 204) le préambule (p ; pa ; pb) comprenant la séquence de préambule primaire (ps1 ; ps1a ; ps1b) et la séquence de préambule secondaire (ps2 ; ps2a ; ps2b) vers un dispositif de communication radio secondaire (BS), en particulier une station de base.

2. Dispositif de communication radio primaire (T1 ; T2) selon la revendication 1, le dispositif de communication radio primaire (T1 ; T2) étant en outre configuré pour :

émettre (104 ; 204) la séquence de préambule primaire (ps1) par l'intermédiaire d'une première ressource radio primaire (rr1a), en particulier d'une première ressource radio de liaison montante primaire ; et
émettre (104 ; 204) la séquence de préambule secondaire (ps2) par l'intermédiaire d'une seconde ressource radio primaire (rr1b), en particulier d'une seconde ressource radio de liaison montante primaire.

3. Dispositif de communication radio primaire (T1 ; T2) selon l'une des revendications précédentes, dans lequel un groupe de séquences de préambules secondaires (ps2) est associé à une seule séquence de préambule primaire (ps1).

4. Dispositif de communication radio primaire (T1 ; T2) selon l'une des revendications précédentes, dans lequel une négation (d) comprenant une référence à la séquence de préambule secondaire (ps2) est reçue.

5. Dispositif de communication radio primaire (T1 ; T2) selon l'une des revendications précédentes, dans lequel une autorisation (g) comprenant une référence à la séquence de préambule secondaire (ps2) est reçue, et dans lequel des données (Da) sont émises en réponse à l'autorisation (g).

6. Dispositif de communication radio primaire (T1 ; T2) selon l'une des revendications précédentes, dans lequel la séquence de préambule primaire (ps1) est choisie dans une table ayant un nombre limité de séquences de préambules primaires (1 ... N) définies, et la séquence de préambule secondaire (ps2) est choisie dans une table ayant un nombre limité de séquences de préambules secondaires (1 ... NM) définies.

7. Dispositif de communication radio primaire (T1 ; T2) selon la revendication précédente, dans lequel la séquence de préambule primaire (ps1) est choisie de manière aléatoire dans la table ayant le nombre limité de séquences de préambules primaires (1 ... N) définies, et la séquence de préambule secondaire (ps2) est choisie de manière aléatoire dans la table ayant le nombre limité de séquences de préambules secondaires (1 ... NM) définies.

8. Dispositif de communication radio primaire (T1 ; T2) selon l'une des revendications 1 à 6, dans lequel la séquence de préambule secondaire (ps2a) est déterminée en fonction d'une classe de priorité du dispositif de communication radio primaire (T1 ; T2) ou d'un service s'exécutant sur le dispositif de communication radio primaire (T1 ; T2).

9. Dispositif de communication radio primaire (T1 ; T2) selon l'une des revendications précédentes, dans lequel la séquence de préambule secondaire (ps2) est émise par l'intermédiaire d'un certain nombre de sous-porteuses LTE d'une bande de garde LTE entre une séquence de préambule LTE et des allocations de données adjacentes.

10. Dispositif de communication radio secondaire (BS), en particulier une station de base, pour un réseau de communication radio (2), le dispositif de communication radio secondaire (BS) comprenant un émetteur-récepteur (Tr) configuré pour :

- recevoir (104 ; 204) un préambule (p ; pa ; pb) en provenance d'au moins un dispositif de communication radio primaire (T1 ; T2), en particulier un terminal, par l'intermédiaire d'une ressource radio primaire (rr1), en particulier d'une ressource radio de liaison montante primaire ; et

comprenant un processeur (Pr) configuré pour :

- vérifier (300) qu'une séquence de préambule primaire (ps1 ; ps1a ; ps1b) est présente dans le préambule (p ; pa ; pb), dans lequel la séquence de préambule primaire (ps1 ; ps1a ; ps1b) a une première propriété de séquence ; et
- vérifier (302) qu'une séquence de préambule secondaire (ps2 ; ps2a ; ps2b) est présente dans le préambule (p ; pa ; pb), dans lequel la séquence de préambule secondaire (ps2 ; ps2a ; ps2b) a une seconde propriété de séquence associée à la première propriété de séquence, dans lequel la seconde propriété de séquence de la séquence de préambule secondaire (ps2) est mathématiquement relaxée par rapport à la première propriété de séquence de la séquence de préambule primaire (ps1) en ce qui concerne la capacité à dériver des décalages de fréquence et/ou de temps précis du préambule (p ; pa ; pb), et dans lequel la séquence de préambule secondaire (ps2) est plus courte que la séquence de préambule primaire (ps1).

11. Dispositif de communication radio secondaire (BS) selon la revendication 10, le dispositif de communication radio secondaire (BS) étant configuré pour :

- déterminer (316) une collision de tentatives d'accès depuis les premier et second dispositifs de communication primaire (T1, T2) en cas de réception simultanée d'un premier préambule (pa) en provenance d'un premier dispositif de communication radio primaire (T1) et d'un second préambule (pb) en provenance d'un second dispositif de communication radio primaire (T2), la détermination (316) comprenant :
- la vérification (314) qu'une première séquence de préambule primaire (ps1) a été reçue,
- la vérification (318) qu'une première séquence de préambule secondaire (ps2a) étant associée à la première séquence de préambule primaire (ps1) a été reçue, et
- la vérification (318) qu'une seconde séquence de préambule secondaire (ps2b) étant associée à la première séquence de préambule primaire (ps1) a été reçue.

**12.** Dispositif de communication radio secondaire (BS) selon la revendication 11, le dispositif de communication radio secondaire (BS) étant configuré pour :

- réaliser (332) une estimation d'un premier canal (UL1), en particulier d'un premier canal de liaison montante, entre le premier dispositif de communication radio primaire (T1) et le dispositif de communication radio secondaire (BS) en fonction de la première séquence de préambule secondaire (ps2a) ;
- réaliser (334) une estimation d'un second canal (UL2), en particulier d'un second canal de liaison montante, entre le second dispositif de communication radio primaire (T2) et le dispositif de communication radio secondaire (BS) en fonction de la seconde séquence de préambule secondaire (ps2b) ; et

déterminer une valeur de corrélation en comparant les estimations des premier et second canaux (UL1, UL2).

**13.** Dispositif de communication radio secondaire (BS) selon la revendication 12, le dispositif de communication radio secondaire (BS) étant configuré pour :

- recevoir (136, 236) des premières données (Da) en provenance du premier dispositif de communication radio primaire (T1) et des secondes données (Db) en provenance du second dispositif de communication radio primaire (T2), les premières et secondes données étant superposées, par l'intermédiaire d'une même ressource radio secondaire (rr2), en particulier d'une même ressource radio de liaison montante secondaire ;
- décoder (338), si on suppose que les premier et second canaux (UL1, UL2) ne sont pas corrélés sur la base de la valeur de corrélation déterminée, les premières et secondes données (Da, Db) superposées.

**14.** Dispositif de communication radio secondaire (BS) selon la revendication 12, le dispositif de communication radio secondaire (BS) étant configuré pour :

- autoriser (g), si on suppose que les premier et second canaux (UL1, UL2) ne sont pas corrélés sur la base de la valeur de corrélation déterminée :

  une première ressource radio secondaire (rr2a) pour une émission de données par le premier dispositif de communication radio primaire (T1), et
  une seconde ressource radio secondaire (rr2b) pour une émission de données par le second dispositif de communication radio primaire (T2).

**15.** Procédé pour faire fonctionner un réseau de communication radio (2), le procédé comprenant :

- la réception (104 ; 204) d'un préambule (p ; pa ; pb) en provenance d'au moins un dispositif de communication radio primaire (T1 ; T2), en particulier un terminal, par l'intermédiaire d'une ressource radio primaire (rr1), en particulier d'une ressource radio de liaison montante primaire ;
- la vérification (300) qu'une séquence de préambule primaire (ps1 ; ps1a ; ps1b) est présente dans le préambule (p ; pa ; pb), dans lequel la séquence de préambule primaire (ps1 ; ps1a ; ps1b) a une première propriété de séquence ; et
- la vérification (302) qu'une séquence de préambule secondaire (ps2 ; ps2a ; ps2b) est présente dans le préambule (p ; pa ; pb), dans lequel la séquence de préambule secondaire (ps2 ; ps2a ; ps2b) a une seconde propriété de séquence associée à la première propriété de séquence, dans lequel la seconde propriété de séquence de la séquence de préambule secondaire (ps2) est mathématiquement relaxée par rapport à la première propriété de séquence de la séquence de préambule primaire (ps1) en ce qui concerne la capacité à dériver des décalages de fréquence et/ou de temps précis du préambule (p ; pa ; pb), et dans lequel la séquence de préambule secondaire (ps2) est plus courte que la séquence de préambule primaire (ps1).

**16.** Produit-programme d'ordinateur mis en œuvre sur un support non transitoire lisible par ordinateur (MR) pour effectuer des opérations, le produit-programme d'ordinateur comprenant des instructions qui, lorsqu'elles sont exécutées par un processeur (Pr), effectuent les opérations d'un procédé selon la revendication précédente.

T1 BS T2

100 200

102 202

ps1a ps2a ps1b ps2b

104 204

pa rr1a rr1b pb rr1a rr1b

300

302

Fig. 1

T1 BS T2

g g

342

308

rr2 rr2

136 Da Db 236

ACK ACK

338

Fig. 12

Fig. 2

Fig. 3

Fig. 4

Fig. 5

Fig. 6

Fig. 7

Fig. 8

Fig. 9

ps2b  ps2a                    eUL2a  eUL1a

402                                                    400

ps1

404                eUL2b  eUL1b

Fig. 10

T1            BS            T2

108        332            208        316

          334

g1    340    g2

136    Da

rr2b

Db

rr2a                              236

ACK    338    ACK

Fig. 11

Fig. 13

MR   Pr   Tr        A

Fig. 14

T

MR   Pr   Tr        A

BS

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012082053 A1

- WO 2011065875 A1

**Non-patent literature cited in the description**

- *3GPP TS 36.321 V12.7.0,* September 2015

- *3GPP TS 36.211 V12.7.0,* September 2015